(19) **Europäisches Patentamt**

**European Patent Office**

**Office européen des brevets**

(11) **EP 1 110 023 B1**

(12) **FASCICULE DE BREVET EUROPEEN**

(45) Date de publication et mention
de la délivrance du brevet:
**25.01.2006 Bulletin 2006/04**

(21) Numéro de dépôt: **99942948.3**

(22) Date de dépôt: **10.09.1999**

(51) Int Cl.:
*F16L 41/00* (2006.01)    *F16L 43/00* (2006.01)

(86) Numéro de dépôt international:
**PCT/FR1999/002153**

(87) Numéro de publication internationale:
**WO 2000/016000 (23.03.2000 Gazette 2000/12)**

(54) **RACCORD ETANCHE A GEOMETRIE VARIABLE**

ABGEDICHTETE KUPPLUNG MIT VERSTELLBARER GEOMETRIE

SEALING CONNECTOR WITH VARIABLE GEOMETRY

(84) Etats contractants désignés:
**AT BE CH CY DE DK ES FI FR GB GR IE IT LI LU MC NL PT SE**

(30) Priorité: **10.09.1998 FR 9811451**

(43) Date de publication de la demande:
**27.06.2001 Bulletin 2001/26**

(73) Titulaire: **M.D.C. Sarl**
**73460 Frontenex (FR)**

(72) Inventeurs:
• **MORIS, Claude**
**F-73200 Albertville (FR)**
• **MORIS, Damien**
**F-73200 Albertville (FR)**
• **MORIS, Christophe**
**F-73200 Albertville (FR)**

(74) Mandataire: **Schmitt, John**
**Roosevelt Consultants,**
**109, rue Sully,**
**BP 6138**
**69466 Lyon Cédex 06 (FR)**

(56) Documents cités:
| EP-A- 0 119 782 | WO-A-97/19286 |
| WO-A-97/24549 | DE-A- 1 750 202 |
| FR-A- 902 066 | FR-A- 2 273 221 |
| US-A- 1 285 849 | US-A- 3 376 053 |

**Description**

La présente invention est relative à un raccord étanche à géométrie variable permettant de présenter une infinité de positions angulaires afin de s'adapter au mieux à son milieu d'utilisation.

On connaît des raccords de ce genre qui présentent généralement des éléments assemblés entre eux pour constituer une liaison rotule permettant d'obtenir différentes angulaires dans l'espace.

On constate que ce type de raccord à rotule présente des inconvénients en ce qui concerne, d'une part la maîtrise de l'étanchéité entre les éléments ne permettant pas d'obtenir de grands débits hydrauliques, et d'autre part le passage de câbles électriques ou analogues.

On connaît d'après la demande de brevet WO 97/24549 un raccord étanche comportant un conduit principal pourvu de deux entrées et une sortie, dont l'une au moins des entrées est prévue pour recevoir un manchon susceptible de pivoter par rapport à l'axe principal du conduit dans des positions angulaires différentes.

On note que l'une des entrées du conduit principal comporte une face tronquée qui présente une génératrice, tandis que le raccord venant se monter sur cette entrée présente également une face tronquée portée par une autre génératrice.

On constate que lors du montage du raccord sur l'entrée du conduit principal, que les génératrices de chaque face tronquée ne se coupent pas en un point d'intersection unique se trouvant au centre de la liaison.

En outre, le raccord n'est pas démontable du conduit principal, et son angle d'inclinaison est prévu pour positionner ledit manchon par rapport au conduit principal dans des plans différents.

On connaît du document FR-2 273 221 un raccord selon le préambule de la revendication 1.

Le raccord étanche à géométrie variable suivant la présente invention a pour objet de permettre à son utilisateur, et suivant les cas d'application, de présenter ledit raccord dans des positions angulaires différentes, à savoir, soit droit, soit coudé à différents degrés.

Le raccord étanche suivant la présente invention est défini par l'ensemble combiné des caractéristiques de la revendication 1.

Le raccord étanche à géométrie variable suivant la présente invention peut en outre comprendre les caractéristiques des revendications dépendantes.

La description qui va suivre en regard des dessins annexés, donnés à titre d'exemples non limitatifs, permettra de mieux comprendre l'invention, les caractéristiques qu'elle présente et les avantages qu'elle est susceptible de procurer :

Les figures 1 à 18 ne reflètent pas l'invention mais sont utiles à sa compréhension.

Figures 1a à 1d sont des vues schématiques illustrant le principe général objet de la présente invention.

Figures 2a à 2f sont des vues schématiques représentant le principe général d'un raccord étanche à géométrie variable.

Figure 3 est une vue illustrant raccord étanche à géométrie variable.

Figure 4 est une vue représentant un second raccord étanche à géométrie variable.

Figure 5 est une vue montrant un troisième raccord étanche à géométrie variable

Figure 6 est une vue illustrant un accessoire permettant la liaison des éléments pour disposer un raccord étanche dans une position angulaire particulière.

Figures 7 à 13 sont des vues représentant un autre raccord étanche à géométrie variable destiné plus particulièrement à la mise en place de grosses canalisations de type réseau hydraulique, pétrole ou gaz.

Figures 14 à 18 sont des vues montrant un autre raccord étanche à géométrie variable destiné plus particulièrement à protéger les câbles électriques.

Figures 19 à 21 sont des vues illustrant une réalisation du raccord étanche à géométrie variable selon l'invention dont les éléments creux présentent un alésage interne à profit torturé, mais garantissant toujours une même section.

Figures 22 à 24 sont des vues représentant une autre réalisation du raccord étanche à géométrie variable selon l'invention dont la liaison entre les éléments creux est réalisée par une bague de fixation et des fils métalliques.

Figures 25 à 27 sont des vues montrant une autre réalisation du raccord étanche à géométrie variable selon l'invention dont la liaison entre les éléments creux est réalisée par une bague de fixation à filetage inversé.

Figures 28 et 29 sont des vues illustrant une autre réalisation du raccord étanche à géométrie variable selon l'invention dont la liaison entre les éléments creux est réalisée par une bague de fixation et une bille d'indexation.

Figures 30 à 33 sont des vues représentant une autre réalisation du raccord étanche à géométrie variable selon l'invention dont la liaison entre les éléments creux est réalisée par une bague de fixation constituée de deux parties assemblées.

Figures 34 à 36 sont des vues représentant une autre réalisation du raccord étanche à géométrie variable selon l'invention destiné à être utilisé dans le domaine de la connectique électrique et notamment dans l'emploie de grosses gaines protectrices rigides.

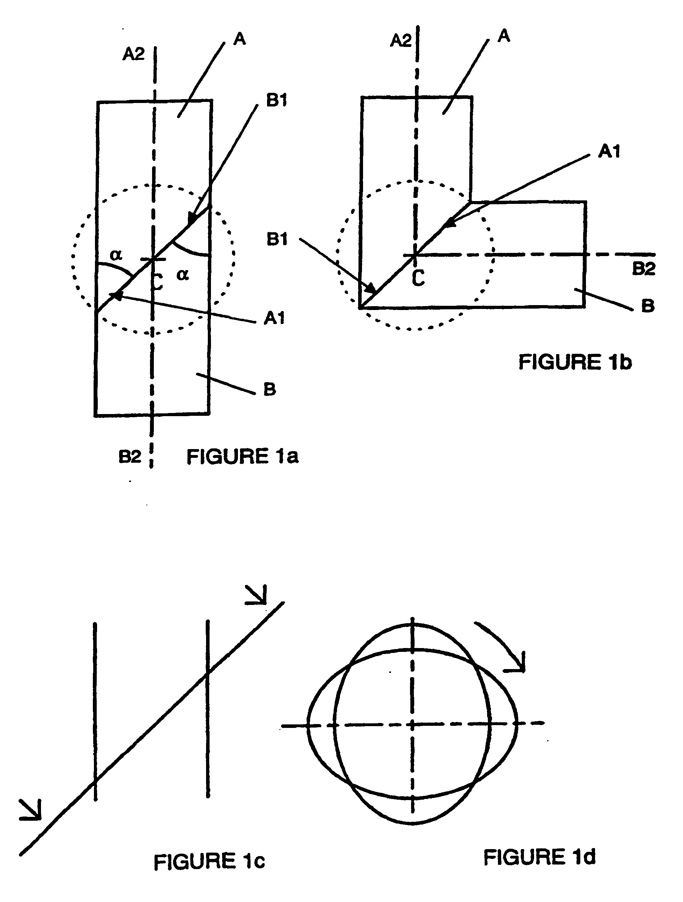

En figures 1a et 1b on a montré un principe général auquel doit répondre le raccord étanche 1 suivant la présente invention.

Ce principe général de l'invention consiste à prendre deux éléments cylindriques A et B comportant respectivement à chaque extrémité une face tronquée A1 et B1 inclinée d'un angle α par rapport aux génératrices ou axes principaux A2 et B2, ou par rapport au bord extérieur de chaque élément.

Dans notre exemple, l'angle α présente une inclinaison de 45° degrés. Cette inclinaison peut être différente sans pour autant changer l'objet de l'invention.

On note que les éléments cylindriques A et B présentent une forme identique de manière que lors de leur assemblage les faces tronquées A1 et B1 viennent en appui l'une contre l'autre.

En outre, on constate que les génératrices A2 et B2 de chaque élément cylindrique A et B se rejoignent toujours en un point unique d'intersection C, compris dans les plans en contact contenant les faces tronquées A1 et B1, et ceci indépendamment de la position angulaire des deux éléments cylindriques l'un par rapport à l'autre.

Cette disposition particulière des éléments cylindriques A et B permet, lors d'une rotation d'un demi-tour de l'un des deux éléments autour du point C, et dans le plan contenant les faces tronquées A1, B1 en contact, d'obtenir une variation de la position angulaire des deux éléments cylindriques qui est comprise entre 90° et 180° degrés pour un angle α de 45° degrés.

Il est d'ailleurs intéressant de noter que le principe fonctionne également avec un angle α différent de 45° degrés, comme par exemple celui de 30°, 60° ou autres degrés. Dans ces conditions la variation de la position angulaire des deux éléments cylindriques A et B est comprise entre 60° et 180° degrés.

Il est également nécessaire de respecter un dernier paramètre qui consiste en ce que la surface de contact entre les faces tronquées A1 et B1 présente une forme de disque pour que la rotation entre les deux éléments cylindriques A et B soit parfaite et harmonieuse, comme cela est représenté en trait mixte sur les figures 1a et 1b.

En effet, on constate qu'un simple cylindre dont la face tronquée est coupée suivant un angle à 45° degrés, ou autre, présente une surface qui est de type elliptique. Dans ces conditions, dès que l'un des deux cylindres est mis en rotation par rapport à l'autre, on remarque que la surface de contact résultante n'est plus uniforme, entraînant une partie du cylindre à l'extérieur de celle-ci (figures 1c, 1d).

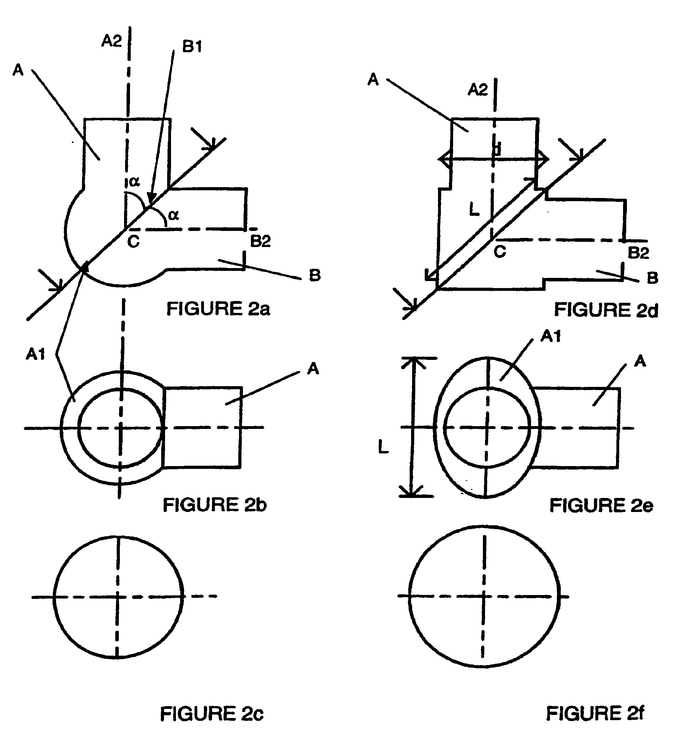

Pour répondre à ce problème, Il est prévu que les extrémités de chaque élément cylindrique A et B présentent un profil en demi-sphère, ou d'une nouvelle forme elliptique, comme cela est représenté en figures 2a à 2f.

Par exemple, on observe qu'il est possible de rendre circulaire la surface de contact entre les deux éléments cylindriques A et B par la réalisation d'un cylindre à profil dit elliptique possédant pour grand diamètre la longueur L et pour petit diamètre d. Il est également nécessaire de respecter que $L = \sqrt{2} {}^*d$ lorsque α=45°. La valeur de L varie en fonction de celle de l'angle α, soit L=d/SINα.

Ainsi, les faces tronquées A1 et B1 sont réalisées en coupant l'extrémité du cylindre à profit dit elliptique suivant l'angle α égal, par exemple à 45° degrés, pour créer la surface de contact circulaire recherchée (figures 2c, 2f).

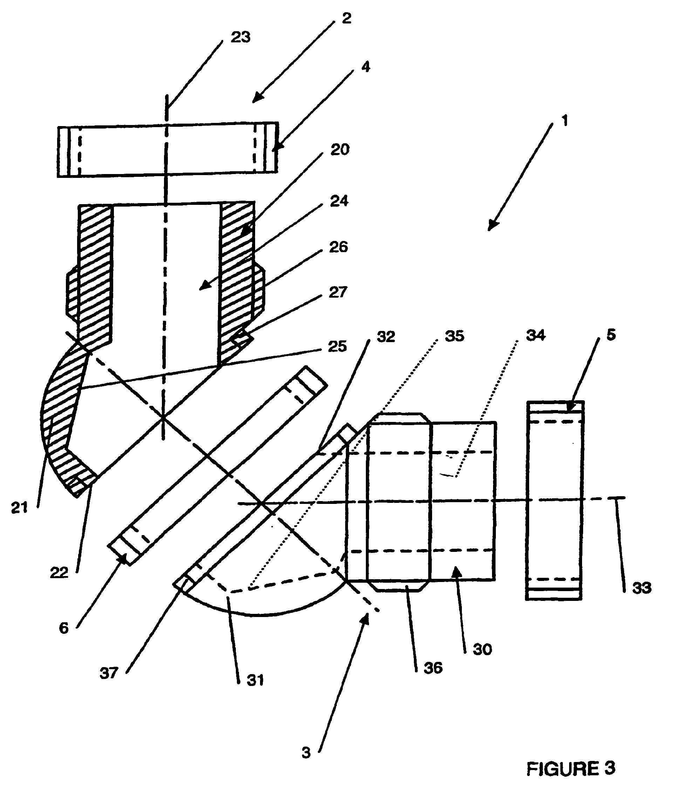

Le principe général étant exposé, on a montré en figures 3 à 5 différentes réalisations de raccords étanches à géométrie variable.

En figure 3 on a représenté un raccord étanche 1 comprenant deux éléments cylindriques creux 2 et 3 de forme identique. Chaque élément comporte une partie cylindrique 20, 30 se prolongeant par une portion 21, 31 à profil extérieur hémisphérique formant une extrémité dudit élément correspondant

Chaque portion 21, 31 présente une face tronquée 22, 32 qui est inclinée d'un angle α par rapport à la génératrice ou axe principal 23, 33 de l'élément 2, 3 correspondant.

La partie cylindrique 20, 30 est percée d'un alésage interne 24, 34 qui débouche dans la portion 21, 31 à profil extérieur hémisphérique.

L'alésage interne 24, 34 présente au niveau de la portion hémisphérique 21, 31 une partie coudée 25, 35 qui est disposée dans un plan perpendiculaire à celui contenant la face tronquée 22, 32.

La partie cylindrique 20, 30 comporte sur sa face externe et à proximité de la portion 21, 31, une nervure filetée 26, 36 destiné à recevoir respectivement une bague de fixation 4, 5.

La portion 21, 31 comporte du côté de la face tronquée 22, 32, et à l'extérieur de la partie coudée 25, 35 de l'alésage 24, 34, un profil fileté 27, 37 prévu pour recevoir une bague de liaison creuse 6 permettant l'assemblage entre eux des éléments 2 et 3 et la communication desdits alésages.

Le profil hémisphérique de chaque portion 21, 31 permet aux faces tronquées 22, 32 de présenter une surface de contact qui est circulaire et plane permettant la mise en place, par exemple, d'un joint torique, non représenté, pour réaliser l'étanchéité du raccord 1 et plus particulièrement entre les deux éléments 2 et 3.

Les filets prévus respectivement sur la bague de liaison 6 et sur les profils 27, 37, présentent un pas très faible permettant, lorsque les deux éléments 2 et 3 sont assemblés, de pivoter l'un par rapport à l'autre sans risque de se désolidariser pour le réglage de la position angulaire du raccord 1.

Lorsque les éléments 2 et 3 sont assemblés et réglés en position angulaire, il suffit de visser les bagues 4 et 5 pour venir bloquer en rotation les éléments 2 et 3 autour de la bague de liaison 6 en venant prendre appui sur cette dernière.

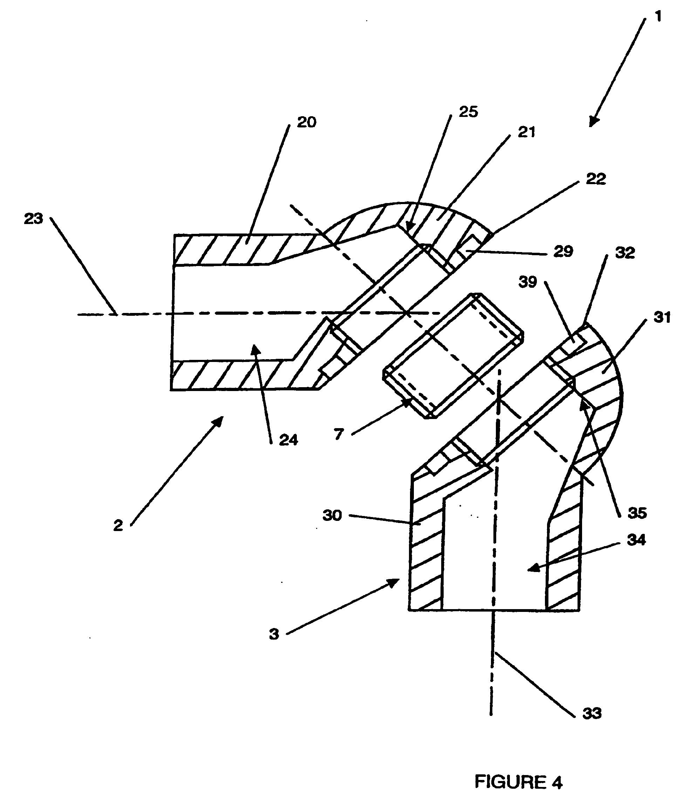

En figure 4 on a montré un raccord étanche 1 à géométrie variable légèrement modifié, et plus particulièrement dans les moyens de fixation permettant l'assemblage et le réglage de la position angulaire des éléments cylindriques 2 et 3 l'un par rapport à l'autre.

Les éléments 2 et 3 présentent une structure identique et semblable à celle décrite précédemment, à savoir qu'ils comportent respectivement une partie cylindrique 20, 30 qui se prolonge par une portion 21, 31 à profil extérieur hémisphérique.

Chaque portion 21, 31 présente une face tronquée 22, 32 qui est inclinée d'un angle α par rapport à la génératrice 23, 33 de l'élément 2, 3 correspondant.

La partie cylindrique 20, 30 est percée d'un alésage interne 24, 34 qui débouche dans la portion 21, 31 à profil extérieur hémisphérique.

L'alésage interne 24, 34 présente au niveau de la portion hémisphérique 21, 31 une partie coudée 25, 35 qui est disposée perpendiculairement au plan contenant la face tronquée 22, 32.

La partie coudée 25, 35 de l'alésage 24, 34 comporte sur sa face interne un filet destiné à coopérer avec une bague de liaison 7 filetée et creuse, permettant l'assemblage entre eux des éléments 2 et 3, et la communication desdits alésages.

Chaque face tronquée 22, 32 présente en fonction du profit extérieur des portions 21, 31, une surface de contact 28, 38 qui est circulaire et plane dans laquelle est percée une gorge circulaire 29, 39 permettant la mise en place, par exemple, d'un joint torique, non représenté, pour réaliser l'étanchéité du raccord 1 et plus particulièrement entre les deux éléments 2 et 3.

Les filets prévus respectivement sur la bague de liaison 7 et sur la face interne des parties coudées 25, 35 de l'alésage 24, 34, présentent un pas très faible permettant lorsque les deux éléments 2 et 3 sont assemblés de pouvoir pivoter l'un par rapport à l'autre sans risque de se désolidariser pour le réglage de la position angulaire du raccord 1.

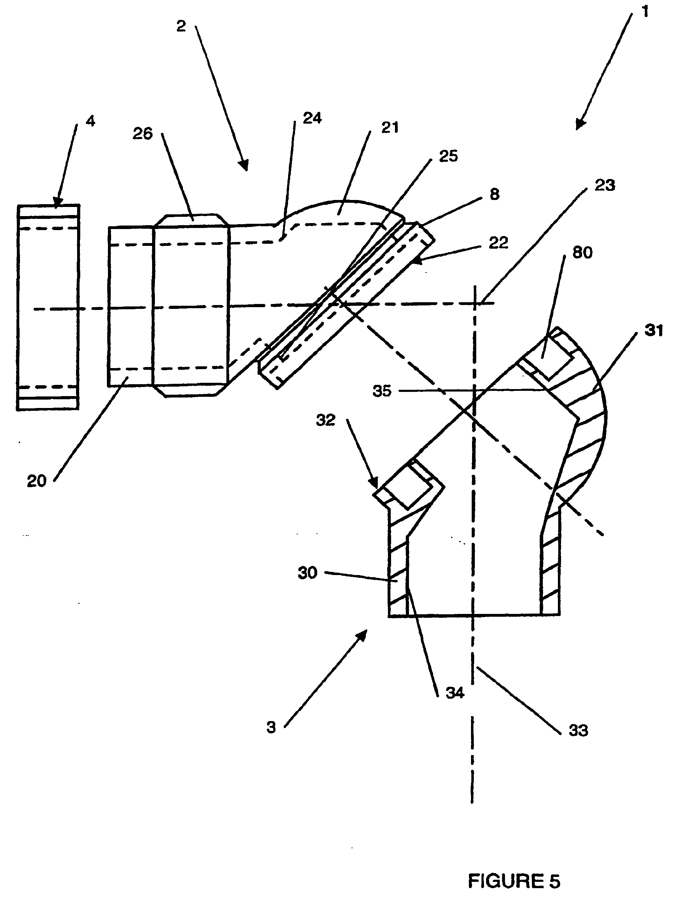

En figure 5 on a illustré un raccord étanche 1 à géométrie variable encore modifié, et plus particulièrement dans les moyens de fixation permettant l'assemblage et le réglage de la position angulaire des éléments cylindriques 2 et 3 l'un par rapport à l'autre.

La portion 21 à profil hémisphérique de l'élément 2 comporte une collerette 8 pourvue de la face tronquée 22 qui est décalée par rapport au plan d'intersection des génératrices.

L'élément 3 est percé sur sa face tronquée 32 d'une gorge périphérique 80 prévue pour coopérer avec la collerette 8 pour l'assemblage par sertissage des éléments 2 et 3 entre eux. On peut prévoir un joint torique au niveau de la liaison des éléments 2 et 3 pour garantir l'étanchéité du raccord 1.

Lorsque les éléments 2 et 3 sont assemblés et réglés en position angulaire, il suffit de visser la bague 4 prévue sur l'élément 2 pour venir bloquer en rotation les éléments 2 et 3.

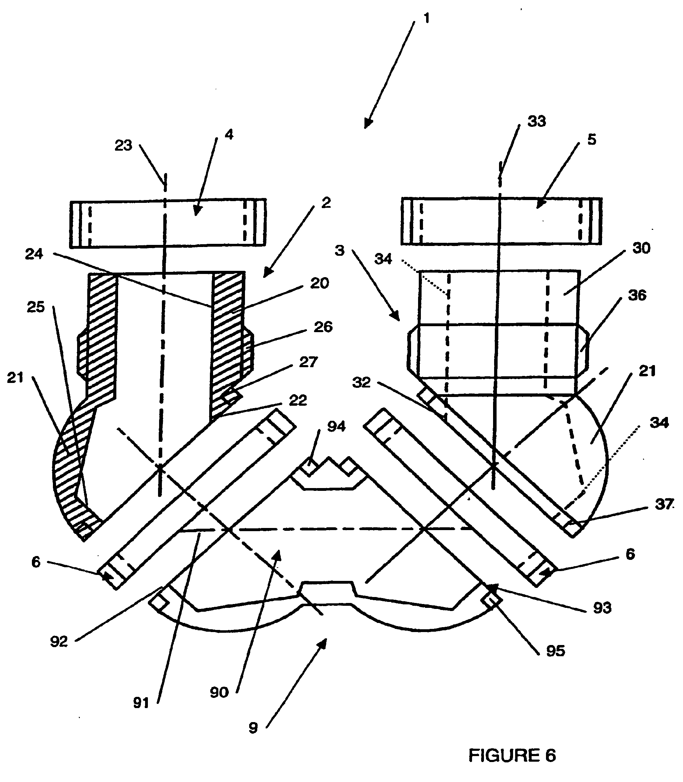

En figure 6 on a montré un raccord étanche 1 à géométrie variable dans une position angulaire particulière pouvant permettre de faire un angle total de 360° qui est réalisée par l'intermédiaire d'une pièce 9 venant se monter entre les éléments 2 et 3.

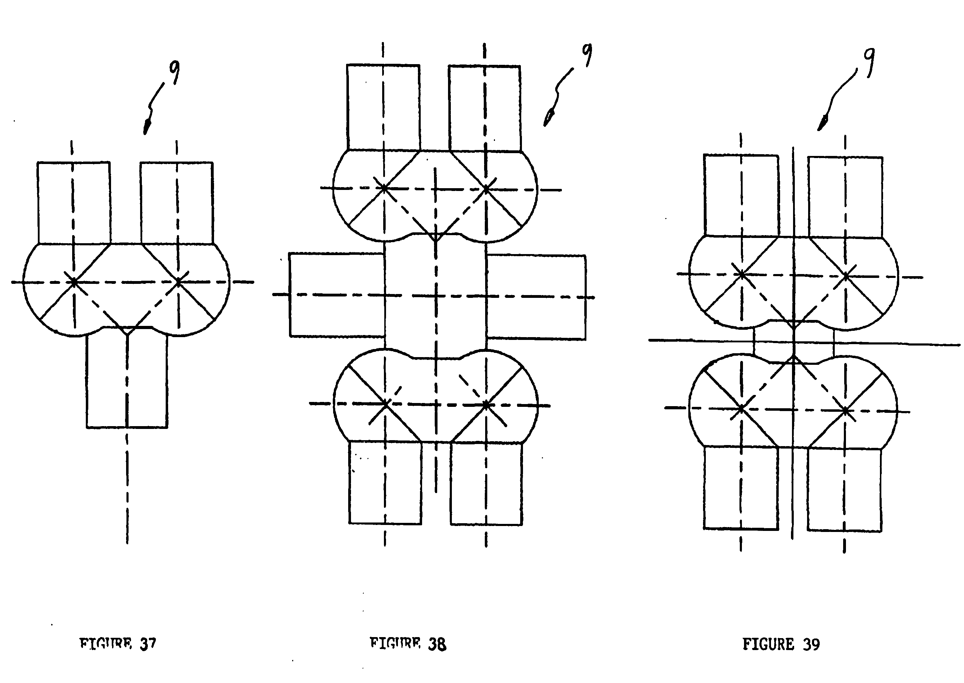

Dans le même principe que pour la pièce intermédiaire 9, on peut réaliser des pièces présentant des caractéristiques de liaison d'ensemble en forme de H, Y ou X selon les figures 37 à 39.

Les éléments 2 et 3 présentent une forme identique et semblable à celle décrite en figure 3. En effet, il peut être prévu que les moyens d'assemblage et de fixation soient semblables à ceux décrits en figure 3 par l'intermédiaire des bagues de fixation 4 et 5 et de la bague de liaison 6.

Dans cet exemple de réalisation, la pièce intermédiaire 9 est percée d'un alésage interne 90 dont la génératrice, ou axe principal 91, est disposée perpendiculairement à ceux 23, 32 des éléments 2, 3.

La pièce intermédiaire 9 présente une première face tronquée 92 qui est inclinée d'un angle α par rapport à la génératrice 91 semblable à celui prévu pour l'inclinaison de la face tronquée 22 de l'élément 2.

Ainsi, les deux faces tronquées 22 et 92 sont disposées dans deux plans distincts et parallèles permettant l'assemblage de l'élément 2 avec la pièce intermédiaire 9 au moyen d'une première bague de liaison 6 décrite précédemment.

A l'opposé de la face tronquée 92, la pièce intermédiaire 9 comporte une autre face tronquée 93 qui est inclinée du même angle α par rapport à la génératrice 91. Mais dans une direction opposée, c'est à dire dans un plan coupant celui contenant la face tronquée 92.

La pièce intermédiaire 9 présente donc une seconde face tronquée 93 qui est inclinée d'un angle α par rapport à la génératrice 91 semblable à celui prévu pour l'inclinaison de la face tronquée 32 de l'élément 3.

Ainsi, les deux faces tronquée 32 et 93 sont disposées dans deux plans distincts et parallèles permettant l'assemblage de l'élément 3 avec la pièce intermédiaire 9 au moyen d'une seconde bague de liaison 6 décrite précédemment.

Les faces tronquées 92, 93 comportent respectivement à l'extérieur de l'alésage 90, un profil fileté 94, 95 prévu pour recevoir chacun la bague de liaison creuse 6 correspondante, permettant l'assemblage des éléments 2 et 3 avec la pièce intermédiaire 9.

On constate que le profil extérieur de la pièce intermédiaire 9 permet aux faces tronquées 92, 93 de présenter une surface de contact qui est circulaire pour permettre une rotation et un réglage angulaire indépendant des éléments 2 et 3 par rapport à la pièce 9.

Chaque face tronquée 92, 93, du fait du profil extérieur de la pièce 9, présente une surface de contact qui est circulaire et plane permettant la mise en place, par exemple, d'un joint torique, non représenté, pour réaliser l'étanchéité du raccord 1 et plus particulièrement entre les éléments 2 et 3 et la pièce intermédiaire 9.

Les filets prévus respectivement sur les bagues de liaison 6, au niveau des parties coudées 25, 35 des éléments 2, 3, et sur la périphérie des faces tronquées 92, 93 de la pièce intermédiaire 9, présentent un pas très faible permettant, lorsque les deux éléments 2 et 3 sont assemblés sur ladite pièce 9, de pivoter par rapport à cette pièce sans risque de se désolidariser pour le réglage de la position angulaire du raccord 1.

Lorsque les éléments 2 et 3 sont assemblés et réglés en position angulaire par rapport à la pièce intermédiaire 9, il suffit de visser les bagues 4 et 5 pour venir bloquer en rotation les éléments et les bagues de liaison 6 en venant prendre appui sur ces dernières.

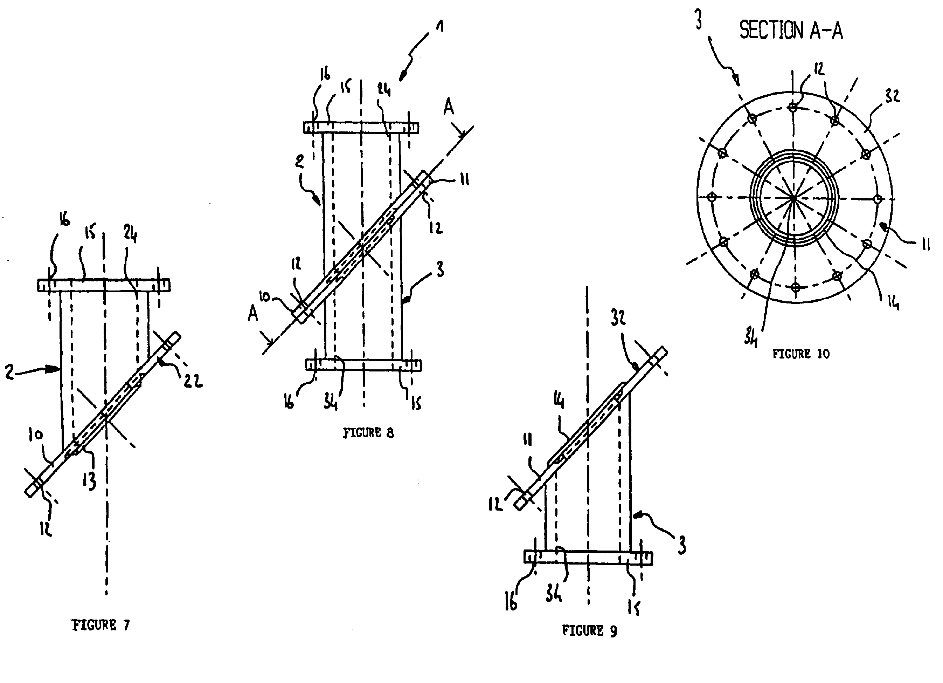

En figures 7 à 10 on a montré le raccord étanche 1 suivant la présente invention comprenant deux éléments 2, 3 de forme identique pourvus chacun d'un alésage interne 24, 34 débouchant de part et d'autre desdits éléments.

Les éléments 2, 3 présentent respectivement une face tronqué 22, 32 délimitée part un disque de fixation 10 et 11 percé d'une couronne de trous 12 permettant l'assemblage des éléments entre eux.

Chaque disque 10 et 11 comporte en son milieu un profil à double conicité 13, 14 assurant l'étanchéité lors de la fixation des éléments 2, 3 entre eux.

A l'opposé des disques 10 et 11 chaque élément 2, 3 comporte une bride 15 percée de trous 16 pour le raccordement aux canalisations.

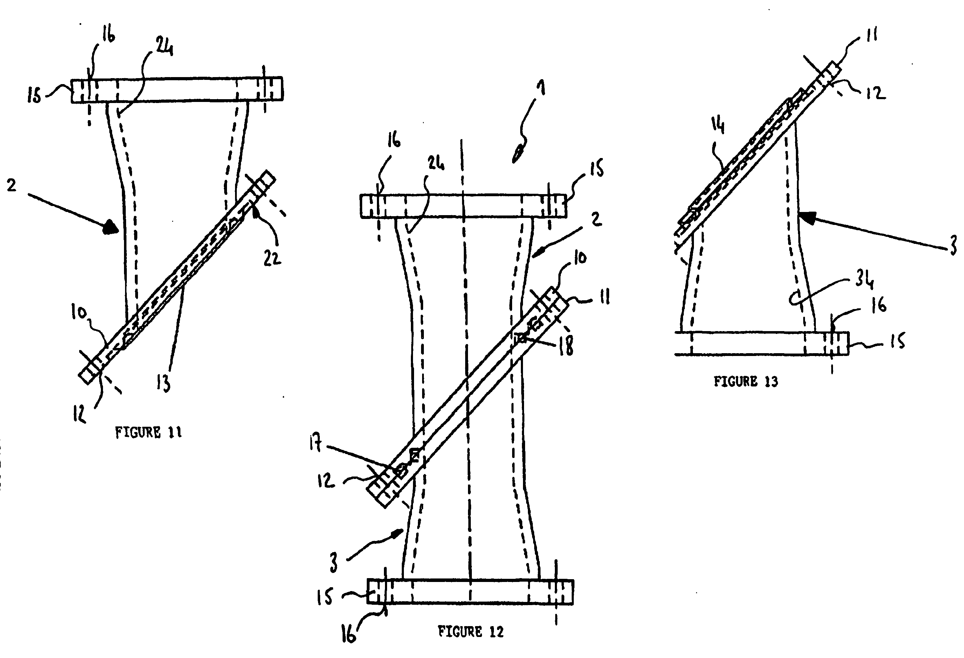

En figures 11 à 13 on a représenté une variante des éléments 2, 3 illustrés en figures 7 à 10, et qui sont obtenus plus particulièrement en partant d'un tube qui est aplati pour obtenir une partie elliptique. Cette partie elliptique de chaque éléments 2, 3 est coupée suivant un l'angle a pour obtenir une section circulaire.

Il est ensuite soudé au niveau de la section circulaire les disques de fixation 10 et 11 percé de la couronne de trous 12 pour permettre l'assemblage des éléments 2, 3 entre eux.

Les disques 10 et 11 présentent respectivement un profil à double conicité 13, 14 recevant un joint 17 assurant l'étanchéité lors de la fixation des éléments entre eux. De plus, il est possible de prévoir un autre joint 18 qui vient renforcer cette étanchéité.

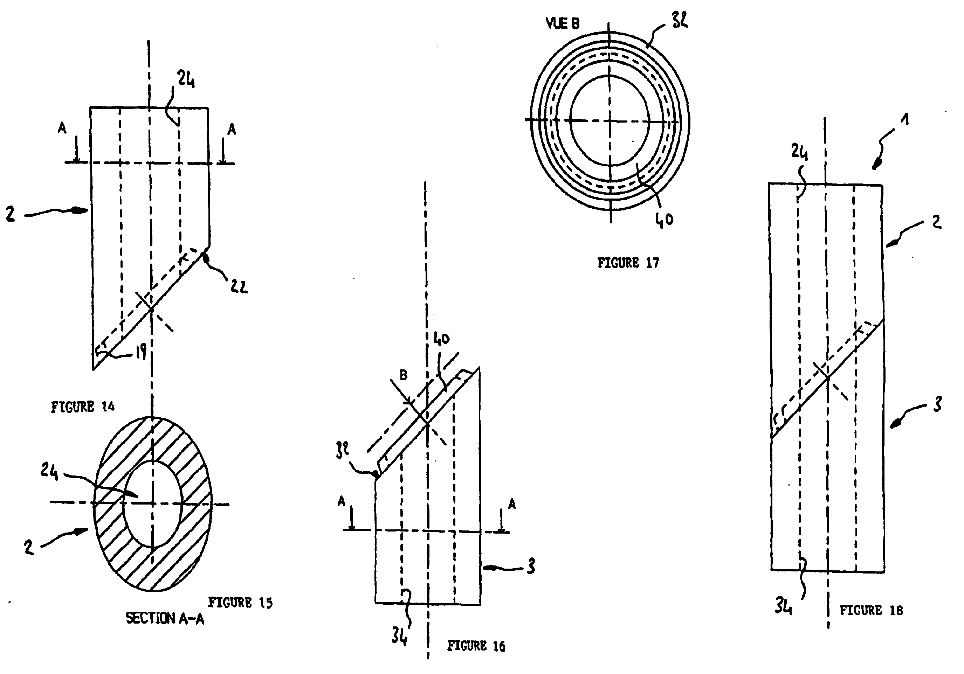

En Figures 14 à 18 on a montré un raccord étanche 1 suivant la présente invention comprenant deux éléments de forme identique 2, 3 réalisés en matière plastique et pourvus chacun d'un alésage interne 24, 34 débouchant de part et d'autre desdits éléments.

Les éléments 2 et 3 présentent un profil extérieur elliptique et un alésage interne 24 et 34 de forme également elliptique.

L'élément 2 comporte une face tronquée 22 dans laquelle est ménagée une rainure conique 19, tandis que l'élément 3 présente une face tronquée 32 solidaire d'une nervure conique 40 de forme complémentaire à celle de la rainure pour réaliser la jonction et la fixation entre les deux éléments.

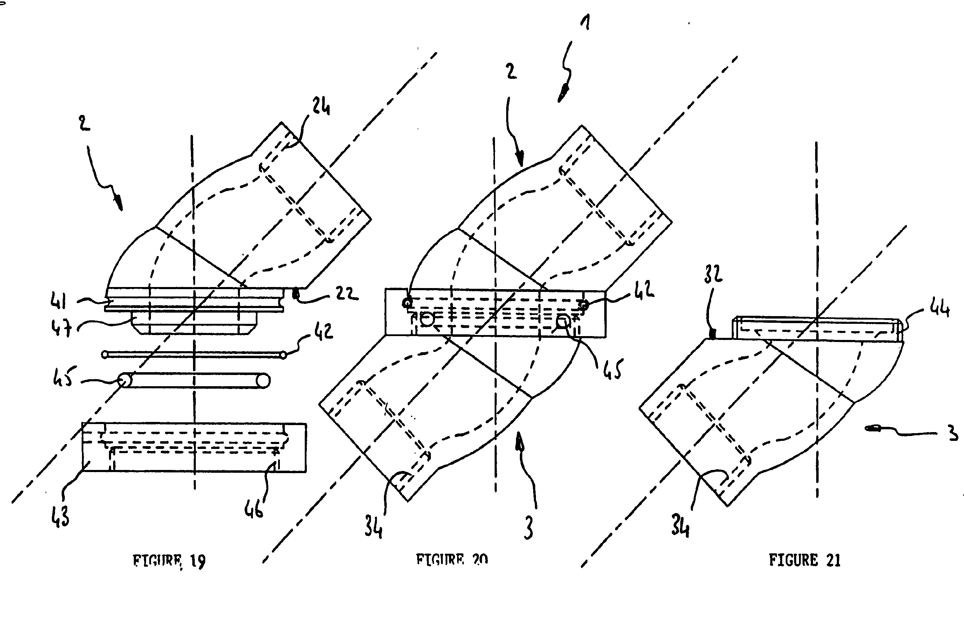

En figures 19 à 21 on a illustré le raccord étanche 1 suivant la présente invention comprenant deux éléments creux 2, 3 permettant par exemple la liaison de conduites contenant du gaz , du liquide, des câbles, de la poudre.

Les éléments creux 2 et 3 sont de morphologie ressemblante et présentent respectivement un alésage interne 24, 34 à profil complexe et une face tronquée 22, 32.

La face tronquée 22 est solidaire d'un prolongement 47 muni d'une rainure circulaire 41 destinée à recevoir un fil métallique ou autre matière 42 pour réaliser une liaison pivotante avec une bague de fixation 43 qui présente dans sa partie interne un profil complémentaire à celui du prolongement.

La face tronquée 32 est solidaire d'une collerette 44 qui est filetée sur son pourtour externe de manière à coopérer avec la partie interne filetée 46 de la bague 43 pour permettre la fixation entre les deux éléments 2 et 3.

Un joint 45 est disposé entre le prolongement de l'élément 2 et la collerette 44 de l'élément 3 pour garantir une parfaite étanchéité lors du montage du raccord 1.

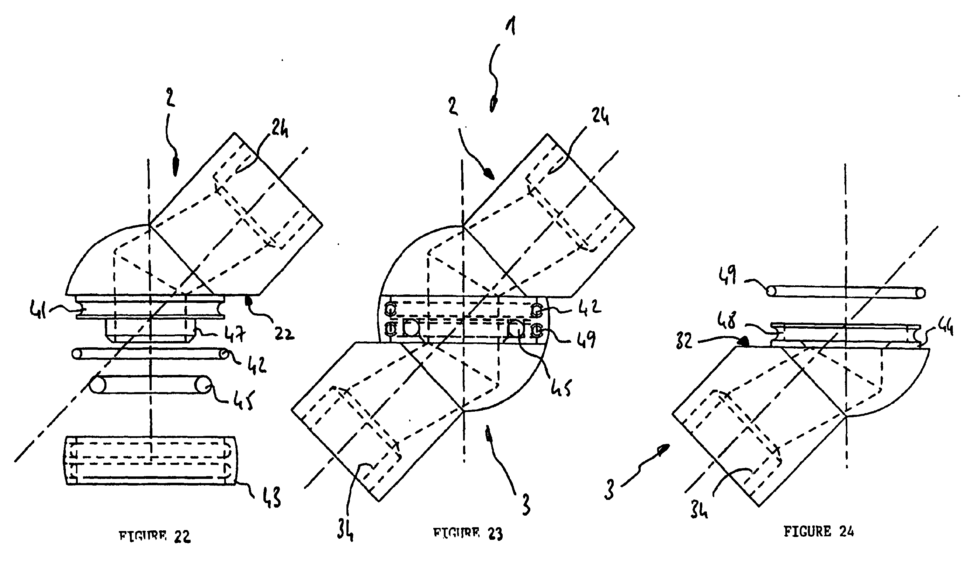

En figures 22 à 24 on a montré le raccord étanche 1 suivant la présente invention comprenant deux éléments creux 2, 3 permettant par exemple la liaison de conduites de gaz, de liquide, de câbles, de poudre.

Les éléments creux 2 et 3 sont de morphologie ressemblante et présentent respectivement un alésage interne 24 , 34 à profil complexe et une face tronquée 22, 32.

La face tronquée 22 est solidaire d'un prolongement 47 muni d'une rainure circulaire 41 destinée à recevoir un fil métallique 42 pour réaliser une liaison pivotante avec une bague de fixation 43 qui présente dans sa partie interne un profil complémentaire à celui du prolongement

La face tronquée 32 est solidaire d'une collerette 44 pourvue d'une rainure circulaire 48 destinée à recevoir un autre fil métallique 49 qui coopère avec la partie interne de forme complémentaire de la bague 43 pour permettre la fixation entre les deux éléments 2 et 3.

Un joint 45 est disposé entre le prolongement 47 de l'élément 2 et la collerette 44 de l'élément 3 pour garantir une parfaite étanchéité lors du montage du raccord 1.

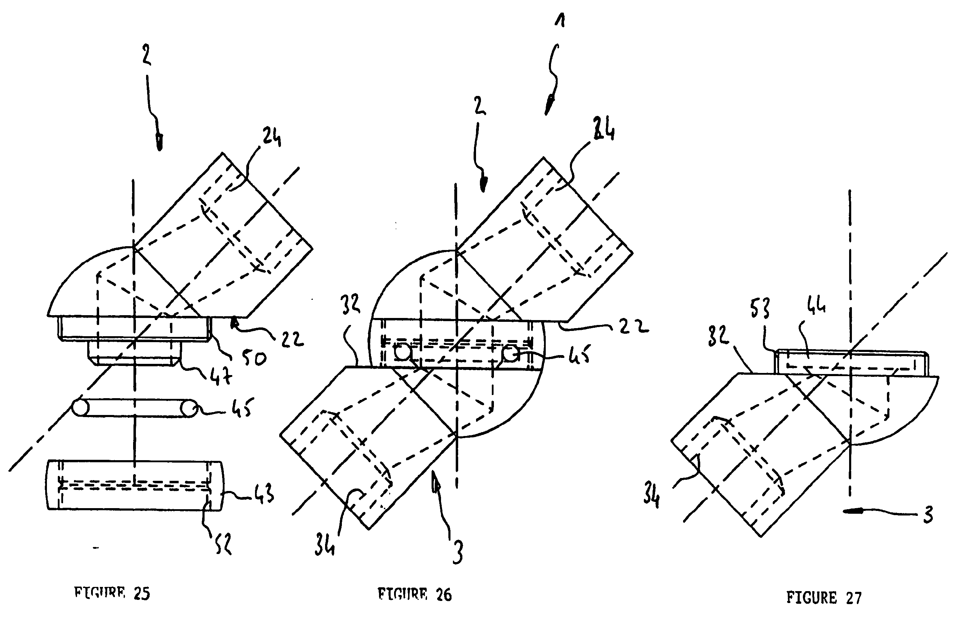

En figures 25 à 27 on a représenté le raccord étanche 1 suivant la présente invention comprenant deux éléments creux 2, 3 permettant, par exemple, la liaison de conduites de gaz, de liquide, de câbles et de poudre.

Les éléments creux 2 et 3 sont de morphologie ressemblante et présentent respectivement un alésage interne 24, 34 à profil complexe et une face tronquée 22, 32.

La face tronquée 22 est solidaire d'un prolongement 47 muni d'un filetage à pas à droite 50 destiné à coopérer avec le filetage interne 51 de la bague de fixation 43. La bague 43 présente dans sa partie interne et à l'opposé du filetage à pas à droite 51 un autre filetage à pas à gauche 52 qui coopère avec le filetage 53 de la collerette 44 solidaire de la face tronquée 32 de l'élément 3.

Ainsi, lorsque la bague 43 est vissée les deux éléments 2 et 3 se rapprochent en assurant le blocage de la liaison. Les faces directement en contact des éléments 2 et 3 peuvent être munies d'un système d'indexation tel qu'un crantage ou autre, afin de bloquer la rotation des pièces l'une par rapport à l'autre.

Un joint 45 est disposé entre les éléments 2 et 3 pour garantir une parfaite étanchéité lors du montage du raccord 1.

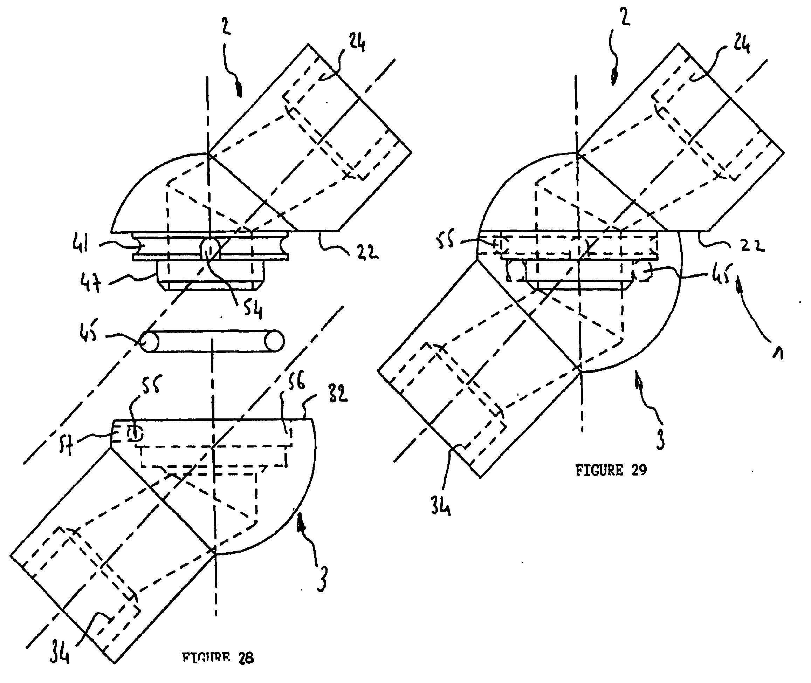

En figures 28 et 29 on a représenté le raccord étanche 1 suivant la présente invention comprenant deux éléments creux 2, 3 permettant par exemple la liaison de conduites de gaz, de liquide, de câbles, de poudre.

Les éléments creux 2 et 3 sont de morphologie ressemblante et présentent respectivement un alésage interne 24, 34 à profil complexe et une face tronquée 22, 32.

La face tronquée 22 de l'élément 2 est solidaire d'un prolongement 47 muni d'une rainure circulaire 41 entaillée perpendiculairement d'un logement 54 permettant le passage d'une bille 55 prévu dans l'élément 3.

La face tronquée 32 de l'élément 3 comporte un alésage interne 56 prévu pour recevoir le prolongement 47 de l'élément 2. L'alésage interne 56 comporte sur sa périphérie un logement 57 pour la mise en place de la bille 55.

Ainsi, pour connecter les deux éléments 2 et 3 entres eux, il suffit de présenter la bille 55 en face du logement 54 pour emboîter les deux éléments. Ensuite, il est nécessaire de faire tourner l'un des deux éléments pour verrouiller la liaison, étant donné que la bille 55 coopère avec la rainure circulaire 41.

Un joint 45 est disposé entre les éléments 2 et 3 pour garantir une parfaite étanchéité lors du montage du raccord 1.

On note que la position de la bille 55 peut être inversée et se trouver sur l'élément 2 sans pour autant changer l'objet de la liaison entre les deux éléments.

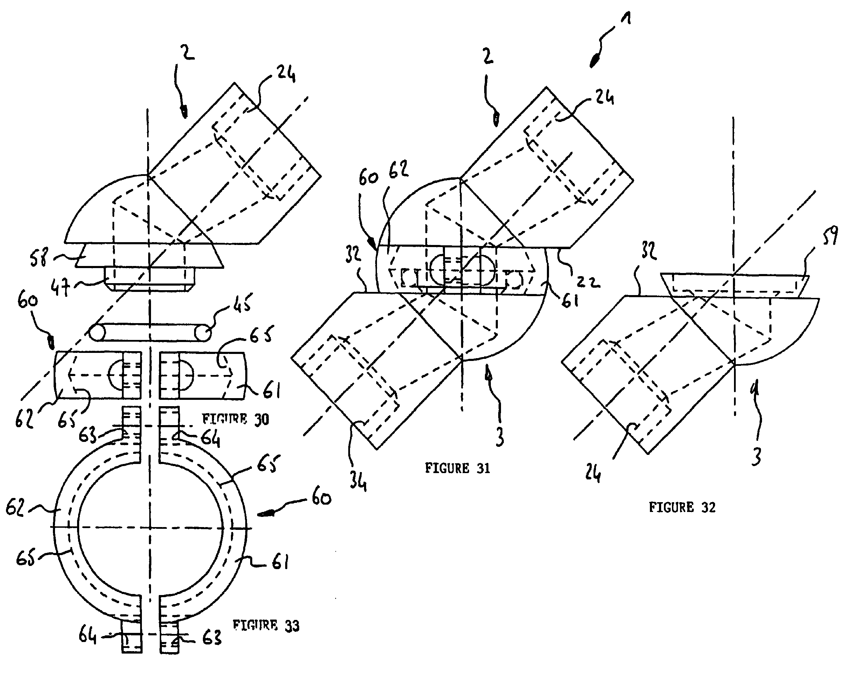

En figures 30 à 33 on a représenté le raccord étanche 1 suivant la présente invention comprenant deux éléments creux 2, 3 permettant des utilisations multiples.

Les éléments creux 2 et 3 sont de forme extérieure ressemblante et présentent respectivement un alésage interne 24, 34 à profil complexe et une face tronquée 22, 32.

La face tronquée 22 de l'élément 2 est solidaire d'un prolongement 47 muni d'une collerette 58 à profil conique, tandis que la face tronquée 32 de l'élément 3 est solidaire d'une autre collerette 59 à profil conique.

Les éléments 2 et 3 sont assemblés l'un à l'autre par l'intermédiaire d'une bague 60 constituée de deux demi-colliers 61 et 62.

Chaque demi-collier 61 et 62 comporte des trous filetés 63 et lisses 64, permettant la réunion de la bague 60.

Egalement, chaque demi-collier 61 et 62 comporte un alésage interne 65 à profil conique dans lequel viennent coopérer les collerettes 58, 59 lors de l'assemblage des éléments 2 et 3.

Ainsi, la bague 60 assemblée autour des collerettes 58 et 59 permet de réaliser une liaison rotative capable de retenir entre eux les éléments 2 et 3. Enfin, un joint 45 est disposé entre les éléments 2 et 3 pour garantir une parfaite étanchéité lors du montage du raccord 1.

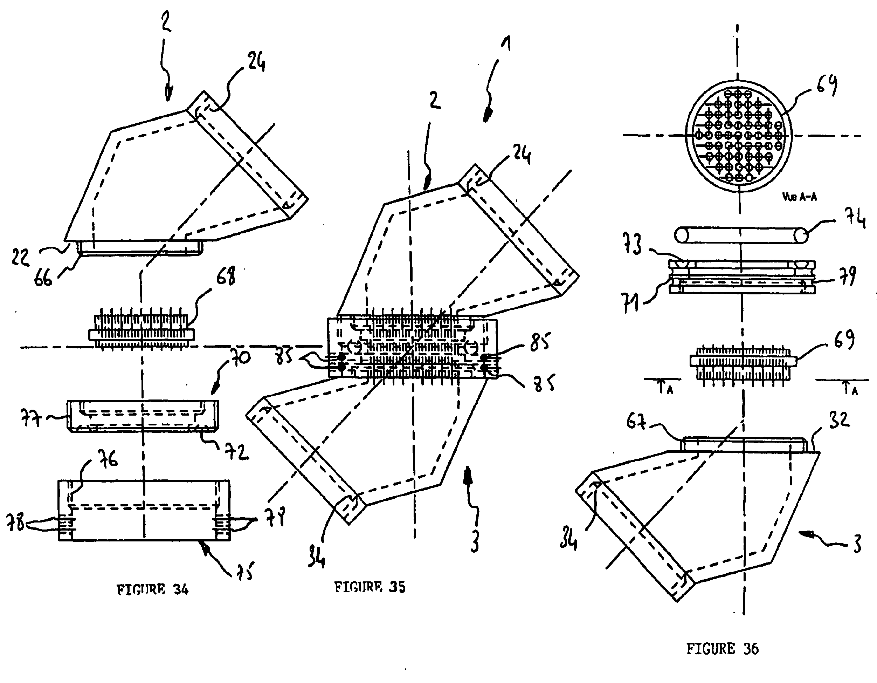

En figures 34 à 36 on a représenté le raccord étanche 1 suivant la présente invention comprenant deux éléments creux 2, 3 permettant, par exemple, la liaison de gaine protectrice rigide dans le domaine de la connectique électrique.

Les éléments creux 2 et 3 sont de forme extérieure identique et présentent respectivement un alésage interne 24 , 34 à profil complexe et une face tronquée 22, 32.

Les faces tronquées 22 et 32 sont solidaires respectivement d'un prolongement fileté 66 et 67 dans lequel sont introduits des pièces 68 et 69 servant de support pour les fiches mâles et femelles de la prise.

Les pièces 68 et 69 sont retenues sur les éléments 2 et 3 par l'intermédiaire de bagues 70 et 71 qui coopèrent respectivement avec les prolongements filetés 66 et 67. Les pièces 68, 66 et 69, 67 peuvent être munies de cannelures, afin d'orienter et d'indexer les deux parties du raccord.

Les bagues 70 et 71 comportent chacune une gorge 72 et 73 recevant un joint torique 74 lors de l'assemblage des éléments 2 et 3 afin d'assurer l'étanchéité de la liaison.

Les bagues 70 et 71 sont réunies entre elles lors de l'assemblage des éléments 2 et 3 par l'intermédiaire d'une autre bague 75.

Cette dernière comporte un taraudage 76 qui coopère avec celui externe 77 de la bague 70 et des perçages latéraux 78 qui débouche à l'intérieur de gorges 79 ménagées sur la périphérie de la bague 71.

A l'intérieur des gorges 79 est introduit des billes 85 permettant de réaliser la liaison rotative entre les éléments 2 et 3.

On constate que suivant les moyens d'assemblage et de fixation des éléments 2, 3 du raccord 1, ce dernier peut toujours au moins se séparer en deux parties distinctes au niveau des faces tronquées, facilitant ainsi la mise en place dudit raccord et le passage, par exemple, de câbles électriques ou la connexion de ces derniers.

On note qu'en fonction de la matière plastique utilisée, c'est à dire un plastique légèrement caoutchouteux, la liaison entre les deux éléments 2 et 3 est étanche et démontable.

Egalement, ce genre de raccord étanche à géométrie variable peut permettre le passage de tout fluide liquide, gazeux, ou pulvérulent sans aucun risque de fuite.

**Revendications**

1. Raccord étanche à géométrie variable, comportant un premier et un second éléments creux (2, 3) présentant respectivement une face tronquée (22, 32) qui est inclinée d'un angle α par rapport à la génératrice (23, 33) de chaque élément de manière que lesdits génératrices se rejoignent en un point unique d'intersection (C) se trouvant au centre de la liaison, les éléments creux (2, 3) comportant respectivement une face tronquée (22, 32) présentant une surface de contact qui est circulaire et plane, **caractérisé en ce qu'**il comprend des moyens de fixation qui sont constitués :

   • sur la face tronquée (22) du premier élément creux (2), d'un prolongement (47 ; 66) et sur la face tronquée (32) du second élément creux (3) d'un profil complémentaire (44, 56, 67) recevant soit au moins un fil métallique (42; 49), soit au moins une bille (55 ; 85),
   • d'un joint (45, 74) disposé entre les faces tronquées (22, 32) de chaque élément creux (2, 3),
   • et d'une bague de fixation (43 ; 60 ; 70, 71) permettant un accouplement pivotant et étanche des éléments creux (2, 3) entre eux tout en permettant le pivotement angulaire étanche des deux éléments creux (2, 3) l'un par rapport à l'autre pour présenter le raccord (1) dans différentes positions angulaires.

2. Raccord étanche à géométrie variable suivant la revendication 1, **caractérisé en ce que** le prolongement (47) est muni d'une rainure circulaire (41) destinée à recevoir le fil métallique (42) pour réaliser une liaison pivotante avec la bague de fixation (43) qui présente dans sa partie interne un profil complémentaire à celui dudit prolongement, tandis que l'élément creux (3) comporte sur sa face tronquée (32) une collerette (44) qui est filetée sur son pourtour externe de manière à coopérer avec la partie interne filetée (46) de la bague (43) pour permettre l'accouplement entre les deux éléments creux (2, 3).

3. Raccord étanche à géométrie variable suivant la revendication 1, **caractérisé en ce que** le prolongement (47) est muni d'une rainure circulaire (41) destinée à recevoir le fil métallique (42) pour réaliser une liaison pivotante avec la bague de fixation (43) qui présente dans sa partie interne un profil complémentaire à celui dudit prolongement, tandis que l'élément creux (3) comporte sur sa face tronquée (32) une collerette (44) pourvue d'une rainure circulaire (48) destinée à recevoir un autre fil métallique (49) qui coopère avec la partie interne de la bague (43) pour permettre l'accouplement entre les deux éléments creux (2, 3).

4. Raccord étanche à géométrie variable suivant la revendication 1, **caractérisé en ce que** le prolongement (47) est muni d'un filetage à pas à droite (50) destiné à coopérer avec le filetage interne (51) de la bague de fixation (43), tandis que l'élément creux (3) comporte sur sa face tronquée (32) une collerette (44) pourvue d'un filetage (53) qui coopère avec un filetage interne (52) de ladite bague de fixation de manière que lorsque la bague (43) est vissée, les deux éléments creux (2, 3) se rapprochent en assurant le blocage de la liaison tout en permettant un accouplement pivotant et étanche des éléments creux (2, 3).

5. Raccord étanche à géométrie variable suivant la revendication 1, **caractérisé en ce que** le prolongement (47) est muni d'une rainure circulaire (41) entaillée perpendiculairement d'un logement (54) permettant le passage de la bille (55), tandis que l'élément creux (3) comporte sur sa face tronquée (32) un alésage interne (56) prévu pour recevoir le prolongement (47) de l'élément creux (2) et dont sa périphérie interne comporte un logement (57) pour la mise en place de la bille (55).

6. Raccord étanche à géométrie variable suivant la revendication 1, **caractérisé en ce que** le prolongement (47) est muni d'une collerette (58) à profil conique, tandis que l'élément creux (3) comporte sur sa face tronquée (32) une autre collerette (59) à profil conique, chaque collerette (58, 59) étant prévus pour coopérer avec une bague (60) constituée de deux demi-colliers (61, 62) comportant des trous filetés (63) et lisses (64) permettant la réunion de ladite bague (60) avec lesdites collerettes coniques (58, 59).

7. Raccord étanche à géométrie variable suivant la revendication 1, **caractérisé en ce que** le prolongement fileté (66, 67) de chaque élément creux (2, 3) coopère avec des pièces de support (68, 69) qui sont retenues à l'intérieur de chaque prolongement par des bagues (70, 71) comportant chacune une gorge (72, 73) recevant le joint torique (74) lors de l'accouplement des éléments creux (2, 3), ladite bague (71) comportant d'autres gorges (79) coopérant avec au moins une bille (85), tandis qu'une autre bague (75) permet de réunir les bagues (70, 71) entre elles lors de l'accouplement pivotant et étanche des éléments creux (2, 3).

8. Raccord étanche à géométrie variable suivant la revendication 7, **caractérisé en ce que** la bague (75) comporte un taraudage (76) qui coopère avec celui externe (77) de la bague (70) et des perçages latéraux (78) qui débouchent à l'intérieur de gorges (79) ménagées sur la périphérie de la bague (71).

9. Raccord étanche à géométrie variable suivant la revendication 8, **caractérisé en ce que** les billes (85) sont introduites à l'intérieur des gorges (79) permettant de réaliser une liaison rotative entre les éléments creux (2, 3).

10. Raccord étanche à géométrie variable suivant l'une quelconque des revendications 1 à 7, **caractérisé en ce que** chaque élément creux (2, 3) peuvent comporter sur les faces tronquées (22, 32) des moyens d'indexation.

**Patentansprüche**

1. Dichtes Anschlussstück mit variabler Geometrie, das ein erstes und ein zweites Hohlelement (2, 3) aufweist, die je eine abgestumpfte Fläche (22, 32) besitzen, die bezüglich der Mantellinie (23, 33) jedes Elements derart um einen Winkel α geneigt ist, dass die Mantellinien in einem einzigen Schnittpunkt (C) aufeinander treffen, der sich in der Mitte der Verbindung befindet, wobei die Hohlelemente (2, 3) je eine abgestumpfte Fläche (22, 32) aufweisen, die eine kreisförmige und ebene Kontaktfläche besitzt, **dadurch gekennzeichnet, dass** es Befestigungsmittel aufweist, die bestehen:

• auf der abgestumpften Fläche (22) des ersten Hohlelements (2) aus einer Verlängerung (47; 66), und auf der abgestumpften Fläche (32) des zweiten Hohlelements (3) aus einem komplementären Profil (44, 56, 67), das entweder mindestens einen Metalldraht (42; 49) oder mindestens eine Kugel (55; 85) aufnimmt,
• aus einer Dichtung (45, 74), die zwischen den abgestumpften Flächen (22, 32) jedes Hohlelements (2, 3) angeordnet ist,
• und aus einem Befestigungsring (43; 60; 70, 71), der eine schwenkbare und dichte Kopplung zwischen den Hohlelementen (2, 3) ermöglicht und gleichzeitig ein dichtes winkelmäßiges Schwenken der beiden Hohlelemente (2, 3) zueinander erlaubt, um das Anschlussstück (1) in verschiedenen Winkelpositionen zu präsentieren.

2. Dichtes Anschlussstück mit variabler Geometrie nach Anspruch 1, **dadurch gekennzeichnet, dass** die Verlängerung (47) mit einer Kreisrille (41) versehen ist, die zur Aufnahme des Metalldrahts (42) bestimmt ist, um eine schwenkbare Verbindung mit dem Befestigungsring (43) herzustellen, der in seinem inneren Bereich ein zum Profil der Verlängerung komplementäres Profil aufweist, während das Hohlelement (3) auf seiner abgestumpften Fläche (32) einen Kragen (44) aufweist, der auf seinem Außenumfang ein Gewinde besitzt, um mit dem inneren Gewindebereich (46) des Rings (43) zusammenzuwirken, um die Kopplung zwischen den beiden Hohlelementen (2, 3) zu ermöglichen.

3. Dichtes Anschlussstück mit variabler Geometrie nach Anspruch 1, **dadurch gekennzeichnet, dass** die Verlängerung (47) mit einer Kreisrille (41) versehen ist, die zur Aufnahme des Metalldrahts (42) bestimmt ist, um eine schwenkbare Verbindung mit dem Befestigungsring (43) herzustellen, der in seinem inneren Bereich ein zum Profil der Verlängerung komplementäres Profil aufweist, während das Hohlelement (3) auf seiner abgestumpften Fläche (32) einen Kragen (44) aufweist, der mit einer Kreisrille (48) versehen ist, die dazu bestimmt ist, einen weiteren Metalldraht (49) aufzunehmen, der mit dem inneren Bereich des Rings (43) zusammenwirkt, um die Kopplung zwischen den beiden Hohlelementen (2, 3) zu ermöglichen.

4. Dichtes Anschlussstück mit variabler Geometrie nach Anspruch 1, **dadurch gekennzeichnet, dass** die Verlängerung (47) mit einem rechtsläufigen Gewinde (50) versehen ist, das dazu bestimmt ist, mit dem Innengewinde (51) des Befestigungsrings (43) zusammenzuwirken, während das Hohlelement (3) auf seiner abgestumpften Fläche (32) einen Kragen (44) aufweist, der mit einem Gewinde (53) versehen ist, das mit einem Innengewinde (52) des Befestigungsrings so zusammenwirkt, dass, wenn der Ring (43) verschraubt wird, die beiden Hohlelemente (2, 3) sich einander annähern und die Blockierung der Verbindung gewährleisten, während sie gleichzeitig eine schwenkbare und dichte Kopplung der Hohlelemente (2, 3) ermöglichen.

5. Dichtes Anschlussstück mit variabler Geometrie nach Anspruch 1, **dadurch gekennzeichnet, dass** die Verlängerung (47) mit einer Kreisrille (41) versehen ist, in die lotrecht ein Sitz (54) eingekerbt ist, der den Durchgang der Kugel (55) erlaubt, während das Hohlelement (3) auf seiner abgestumpften Fläche (32) eine innere Bohrung (56) aufweist, die vorgesehen ist, um die Verlängerung (47) des Hohlelements (2) aufzunehmen und deren Innenumfang einen Sitz (57) für das Einsetzen der Kugel (55) aufweist.

**6.** Dichtes Anschlussstück mit variabler Geometrie nach Anspruch 1, **dadurch gekennzeichnet, dass** die Verlängerung (47) mit einem Kragen (58) mit kegelförmigem Profil versehen ist, während das Hohlelement (3) auf seiner abgestumpften Fläche (32) einen weiteren Kragen (59) mit kegelförmigem Profil aufweist, wobei jeder Kragen (58, 59) vorgesehen ist, um mit einem Ring (60) zusammenzuwirken, der aus zwei Halbringen (61, 62) besteht, die Gewindelöcher (63) und glatte Löcher (64) aufweisen, die die Vereinigung des Rings (60) mit den kegelförmigen Kragen (58, 59) ermöglichen.

**7.** Dichtes Anschlussstück mit variabler Geometrie nach Anspruch 1, **dadurch gekennzeichnet, dass** die mit Gewinde versehene Verlängerung (66, 67) jedes Hohlelements (2, 3) mit Stützteilen (68, 69) zusammenwirkt, die innerhalb jeder Verlängerung von Ringen (70, 71) zurückgehalten werden, die je eine Kehle (72, 73) aufweisen, die den Dichtring (74) beim Koppeln der Hohlelemente (2, 3) aufnehmen, wobei der Ring (71) weitere Kehlen (79) aufweist, die mit mindestens einer Kugel (85) zusammenwirken, während ein weiterer Ring (75) es ermöglicht, die Ringe (70, 71) bei der schwenkbaren und dichten Kopplung der Hohlelemente (2, 3) miteinander zu vereinen.

**8.** Dichtes Anschlussstück mit variabler Geometrie nach Anspruch 7, **dadurch gekennzeichnet, dass** der Ring (75) ein Innengewinde (76), das mit dem Außengewinde (77) des Rings (70) zusammenwirkt, und seitliche Bohrungen (78) aufweist, die innerhalb von Kehlen (79) münden, die auf dem Umfang des Rings (71) ausgebildet sind.

**9.** Dichtes Anschlussstück mit variabler Geometrie nach Anspruch 8, **dadurch gekennzeichnet, dass** die Kugeln (85) ins Innere der Kehlen (79) eingeführt werden, wodurch eine drehende Verbindung zwischen den Hohlelementen (2, 3) ermöglicht wird.

**10.** Dichtes Anschlussstück mit variabler Geometrie nach einem der Ansprüche 1 bis 7, **dadurch gekennzeichnet, dass** jedes Hohlelement (2, 3) auf den abgestumpften Flächen (22, 32) Indexierungsmittel aufweisen kann.

**Claims**

**1.** Sealing connector with variable geometry comprising a first and a second hollow element (2, 3) each having a respective truncated face (22, 32) which is inclined by an angle $\alpha$ with respect to the generatrix (23, 33) of each element so that the said generatrices meet at a single point of intersection (C) at the centre of the connection, the hollow elements (2, 3) each having a respective truncated face (22, 32) with a contact surface which is circular and flat, **characterized in that** it comprises fastening means which consist:

• on the truncated face (22) of the first hollow element (2), of an extension (47; 66) and, on the truncated face (32) of the second hollow element (3), of a complementary profile (44, 56, 67) receiving either at least one metal wire (42; 49) or at least one ball (55; 85),
• of a seal (45, 74) placed between the truncated faces (22, 32) of each hollow element (2, 3),
• and of a fastening ring (43; 60; 70, 71) allowing pivoting and sealed coupling between the hollow elements (2, 3) while allowing the sealed angular pivoting of the two hollow elements (2, 3) with respect to one another so as to present the connector (1) in different angular positions.

**2.** Sealing connector with variable geometry according to Claim 1, **characterized in that** the extension (47) has a circular groove (41) designed to receive the metal wire (42) so as to create a pivoting connection with the fastening ring (43) which, in an internal part thereof, has a profile that complements that of the said extension, while the truncated face (32) of the hollow element (3) has a flange (44) which is threaded on its external periphery so as to engage with the internal threaded part (46) of the ring (43) to allow coupling between the two hollow elements (2, 3).

**3.** Sealing connector with variable geometry according to Claim 1, **characterized in that** the extension (47) has a circular groove (41) designed to receive the metal wire (42) so as to create a pivoting connection with the fastening ring (43) which, in an internal part thereof, has a profile that complements that of the said extension, while the truncated face (32) of the hollow element (3) has a flange (44) with a circular groove (48) designed to receive another metal wire (49) which engages with the internal part of the ring (43) to allow coupling between the two hollow elements (2, 3).

**4.** Sealing connector with variable geometry according to Claim 1, **characterized in that** the extension (47) has a right-hand screw thread (50) designed to engage with the internal screw thread (51) on the fastening ring (43), while the truncated face (32) of the hollow element (3) has a flange (44) with a screw thread (53) which engages with an internal screw thread (52) on the said fastening ring so that when the ring (43) is screwed on, the two hollow elements (2, 3) move towards one another, locking the connection, while allowing pivoting and sealed coupling between the hollow elements (2, 3).

**5.** Sealing connector with variable geometry according to Claim 1, **characterized in that** the extension (47) has a circular groove (41) notched perpendicularly with a housing (54) for the passage of the ball (55), while the truncated face (32) of the hollow element (3) has an internal bore (56) designed to receive the extension (47) of the hollow element (2) and whose internal periphery comprises a housing (57) for putting the ball (55) in place.

**6.** Sealing connector with variable geometry according to Claim 1, **characterized in that** the extension (47) has a conically profiled flange (58), while the truncated face (32) of the hollow element (3) comprises another conically profiled flange (59), each flange (58, 59) being designed to engage with a ring (60) consisting of two half-collars (61, 62) comprising threaded (63) and plain (64) holes allowing the said ring (60) and the said conical flanges (58, 59) to join together.

**7.** Sealing connector with variable geometry according to Claim 1, **characterized in that** the threaded extension (66, 67) of each hollow element (2, 3) engages with support pieces (68, 69) which are retained inside each extension by rings (70, 71) each comprising a groove (72, 73) receiving the O-ring seal (74) when the hollow elements (2, 3) are coupled together, the said ring (71) comprising other grooves (79) engaging with at least one ball (85) while another ring (75) makes it possible to join the rings (70, 71) together during the pivoting and sealed coupling of the hollow elements (2, 3).

**8.** Sealing connector with variable geometry according to Claim 7, **characterized in that** the ring (75) has a tapped thread (76) which cooperates with the external thread (77) on the ring (70) and lateral drillings (78) which open into grooves (79) formed on the periphery of the ring (71).

**9.** Sealing connector with variable geometry according to Claim 8, **characterized in that** the balls (85) are inserted in the grooves (79) to allow a rotary connection to be made between the hollow elements (2, 3) .

**10.** Sealing connector with variable geometry according to any one of Claims 1 to 7, **characterized in that** each hollow element (2, 3) may have indexing means on the truncated faces (22, 32).

A2

A

B1

α

C

α

A1

B

B2    FIGURE 1a

A2

A

A1

B1

C

B2

B

FIGURE 1b

FIGURE 1c

FIGURE 1d

A2

B1

A

α

α

C

B2

B

FIGURE 2a

A1

A

FIGURE 2b

FIGURE 2c

A

A2

d

L

C

B2

B

FIGURE 2d

A1

A

L

FIGURE 2e

FIGURE 2f

FIGURE 3

FIGURE 4

FIGURE 5

FIGURE 6

SECTION A-A

FIGURE 10

FIGURE 9

FIGURE 8

FIGURE 7

FIGURE 11

FIGURE 12

FIGURE 13

EP 1 110 023 B1

FIGURE 18

FIGURE 17

FIGURE 16

FIGURE 15

FIGURE 14

SECTION A-A

VUE B

FIGURE 19

FIGURE 20

FIGURE 21

FIGURE 22

FIGURE 23

FIGURE 24

EP 1 110 023 B1

FIGURE 25

FIGURE 26

FIGURE 27

EP 1 110 023 B1

FIGURE 29

FIGURE 28

FIGURE 32

FIGURE 31

FIGURE 30

FIGURE 33

FIGURE 36

FIGURE 35

FIGURE 34

FIGURE 39

FIGURE 38

FIGURE 37